# EUROPEAN PATENT SPECIFICATION

(11) **EP 2 603 840 B1**
(45) Date of publication and mention of the grant of the patent: **30.10.2019**
(21) Application number: 11746359.6
(22) Date of filing: 28.07.2011
(51) Int. Cl.: G05B 11/01, G05B 19/042

(54) **FLEXIBLE AND SCALABLE MODULAR CONTROL SYSTEM FOR TRANSPORT REFRIGERATION UNITS**
FLEXIBLES UND SKALIERBARES MODULARES STEUERUNGSSYSTEM FÜR TRANSPORTKÜHLEINHEITEN
SYSTÈME DE COMMANDE FLEXIBLE ET MODULAIRE POUR UNITÉS DE RÉFRIGÉRATION DE TRANSPORT

(30) Priority: 13.08.2010 US 373504 P
(43) Date of publication of application: 19.06.2013
(73) Proprietor: Carrier Corporation, Farmington, CT 06489 (US)
(72) Inventor: DUDLEY, Kevin, Cazenovia, NY 13035 (US); STODDARD, Paul, Chittenango, NY 13037 (US); WASER, Daniel, L., Liverpool, NY 13090 (US); DESMARAID, Breet, A., Cicero, NY 13039 (US); HANNON, John, F., Pennellville, NJ 13132 (US); CHAMPAGNE, Deborah, A., North Syracuse, NY 13212 (US)
(74) Representative: Dehns
(86) International application number: PCT/US2011/045734
(87) International publication number: WO 2012/021298

(56) References cited:
- WO-A1-2010/002644
- US-A- 5 469 150
- US-A1- 2006 192 663

## Description

The present disclosure generally relates to a transport refrigeration unit and, in particular, relates to a flexible and scalable modular control system for a transport refrigeration unit with diagnostic and prognostic capabilities.

Refrigeration systems are commonly used for cooling a desired area. Refrigeration works by removing heat from an enclosed area and transferring that heat to an external atmosphere located outside of the enclosed area. Refrigeration systems are widely used in residential and commercial food refrigerators, air-conditioning units in homes and automobiles, and cargo areas of ships and trucks.

Mobile refrigeration systems used to condition frozen and perishable loads in cargo spaces of trucks and trailers are referred to as transport refrigeration units. Besides having the basic components of a typical refrigeration unit, such as a compressor, condenser coil, condenser fan, expansion valve, evaporator coil, and evaporator fan, refrigeration systems, such as transport refrigeration units, have additional components to monitor the performance and control the functionality of the system. Some of the additional components, such as a thermistor and pressure sensor, monitor the performance, while other components, such as a switch or valve, help control the transport refrigeration unit.

Currently, transport refrigeration units are pre-built with a fixed control system. Existing transport refrigeration controls are of an integrated design and have limited flexibility and scalability. Adding additional features and functionality is often difficult or impossible. For instance, the need for more storage or monitoring capabilities is limited to the amount of memory and components originally designed into the control system. The limited storage and monitoring capacities limits diagnostic and prognostic capabilities. This means the existing integrated controls must have sufficient capability for all current and future needs, or a new control system must be designed and built for each application that requires different capabilities. For example, a complex transport refrigeration control system requires a fixed number of inputs and outputs designated to a single function. When used on a simpler system, the unused inputs and outputs on the complex system become wasted. Alternatively, the simple system with fixed inputs and outputs can not be upgraded with additional inputs and outputs to meet the needs of the complex system. Thus, existing integrated controls for transport refrigeration units lack flexibility and scalability.

WO 2010/002644 A1 discloses a refrigerated truck having a power management system for managing the generation and use of power on the refrigerated truck. US 2006/192663 A1 discloses an electrical system for controlling electrically operable resources installed on a vehicular platform. US 5469150 A discloses an information communication system for use with a plurality of devices, such as sensors or actuators, which permits rapid communication of sensor statuses between devices connected in signal communication with the bus.

In accordance with one aspect of the invention there is provided a control system, comprising: a user interface capable of receiving and dispatching information; a power control module capable of distributing power; a first module having a controller and at least one flexibly configurable input connector and at least one flexibly configurable output connector; wherein the control system is configured to configure an output circuit of the output connector to accommodate an output or a discrete digital input via a feedback line that allows software of the control system to determine if the discrete digital input is open or closed such that, if a discrete digital input is connected at the output connector, a logic device of the control system is disabled such that the discrete digital input experiences only a voltage divider, placed from a power supply to ground, wherein the feedback line is placed between the voltage divider; each of the at least one flexibly configurable input connector configured to accommodate a plurality of analog inputs and discrete digital inputs and each of the at least one flexibly configurable output connector configured to accommodate a plurality of outputs or discrete digital inputs; and an interface bus communicatively coupling the user interface, the power control module, and the first module.

In addition there is provided a method for providing a flexible and scalable control system, comprising: providing an interface bus capable of interchangeably accepting various modules; providing a plurality of modules, each module having at least one flexibly configurable input connector and at least one flexibly configurable output connector; wherein the control system configures an output circuit of the output connector to accommodate an output or a discrete digital input via a feedback line that allows software of the control system to determine if the discrete digital input is open or closed such that, if a discrete digital input is connected at the output connector, a logic device of the control system is disabled such that the discrete digital input experiences only a voltage divider, placed from a power supply to ground, wherein the feedback line is placed between the voltage divider; each of the at least one flexibly configurable input connector configured to accommodate a plurality of analog inputs and discrete digital inputs and each of the at least one flexibly configurable output connector configured to accommodate a plurality of outputs or discrete digital inputs; addressing each module communicatively coupled to the interface bus to ensure modular identification and configuration; identifying that proper input and output devices are operatively coupled to the connectors of the modules; recording any improper operation detected in the system with an internal data recorder operatively coupled to one of the plurality of modules; and reporting any improper operation detected in the system through a user interface.

Various other embodiments are described in the claims, including, but not limited to, attaching a data recording module, a high voltage module, and various sensors including thermistors and current sensors.

Other advantages and features will be apparent from the following detailed description when read in conjunction with the attached drawings.

For a more complete understanding of the disclosed system and method, reference should be made to the exemplary embodiments illustrated in greater detail in the accompanying drawings, wherein:
FIG. 1 is a block diagram of an embodiment of a refrigeration system constructed in accordance with the teachings of the prior art;
FIG. 2 is a block diagram of an embodiment of a modular control system constructed in accordance with the teachings of the present disclosure;
FIG. 3 is a block diagram of an exemplary embodiment of a modular control system for a transport refrigeration unit constructed in accordance with the teachings of the present disclosure;
FIG. 4 is a schematic of a sample circuit depicting flexible input capability constructed in accordance with the teachings of the present disclosure; and
FIG. 5 is a schematic of a sample circuit depicting flexible output capability constructed in accordance with the teachings of the present disclosure.

It should be understood that the drawings are not necessarily to scale and that the disclosed embodiments are sometimes illustrated diagrammatically and in partial views. In certain instances, details which are not necessary for an understanding of the disclosed methods and systems or which render other details difficult to perceive may have been omitted. It should be understood, of course, that this disclosure is not limited to the particular embodiments illustrated herein.

### DETAILED DESCRIPTION OF THE DISCLOSURE

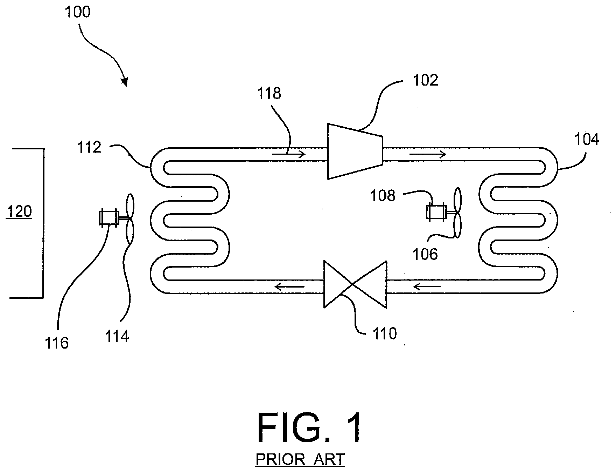

FIG. 1 illustrates a block diagram of a basic refrigeration system 100. The refrigeration system 100 includes a compressor 102, a condenser coil 104, a condenser fan 106 with a condenser motor 108, an expansion valve 110, an evaporator coil 112, an evaporator fan 114 with an evaporator motor 116, and refrigerant 118. The refrigerant 118 is a fluid used to absorb and transfer heat. Examples include, but are not limited to, fluorinated carbons, chlorinated carbons and brominated carbons. The refrigerant 118 absorbs heat by evaporating from a liquid to a gas at a low temperature and pressure, and releases heat by condensing from gas back to liquid at a higher temperature and pressure.

In the depicted example, the refrigerant 118 enters the compressor 102 in a low-temperature, low-pressure gas state. The compressor 102 compresses the refrigerant 118 to a high-temperature, high-pressure gas state. The refrigerant 118 then flows through the condenser coil 104, wherein the refrigerant 118 releases heat until liquefied. Heat in the refrigerant 118 is absorbed by the condenser coil 104. The condenser fan 106 then circulates cool air across the condenser coil 104, transferring heat from the condenser coil to the external atmosphere. The expansion valve 110 then reduces the pressure of the refrigerant 118 as the refrigerant flows through the expansion valve 110, creating a low-temperature, low-pressure liquid. The low-temperature, low-pressure liquid refrigerant 118 then flows through the evaporator coil 112. The evaporator fan 114 draws heat from a desired area to be cooled 120 and circulates the heat across the evaporator coil 112, transferring heat to the evaporator coil 112 in the process. Heat is then absorbed by the refrigerant 118 as it flows through the evaporator coil 112. As the refrigerant 118 absorbs the heat, the refrigerant changes from liquid back to gas. The cycle then repeats.

In order for the refrigerant 118 to absorb and transfer the maximum amount of heat, the basic components in the refrigerant system 100, as depicted in FIG. 1, should operate efficiently. It may be important to monitor and control the basic components in the refrigerant system 100 in order to ensure proper and efficient operation. Thus, the refrigerant system 100 should include a flexible and scalable control system. As a user's needs for refrigerating their loads, particularly during transportation, changes, the control system should be flexible and scalable enough to adapt to those changes. For more perishable temperature sensitive loads, a more complex control system, capable of precision monitoring and accurate controlling, may be required, while for less perishable loads a simpler control system may be used.

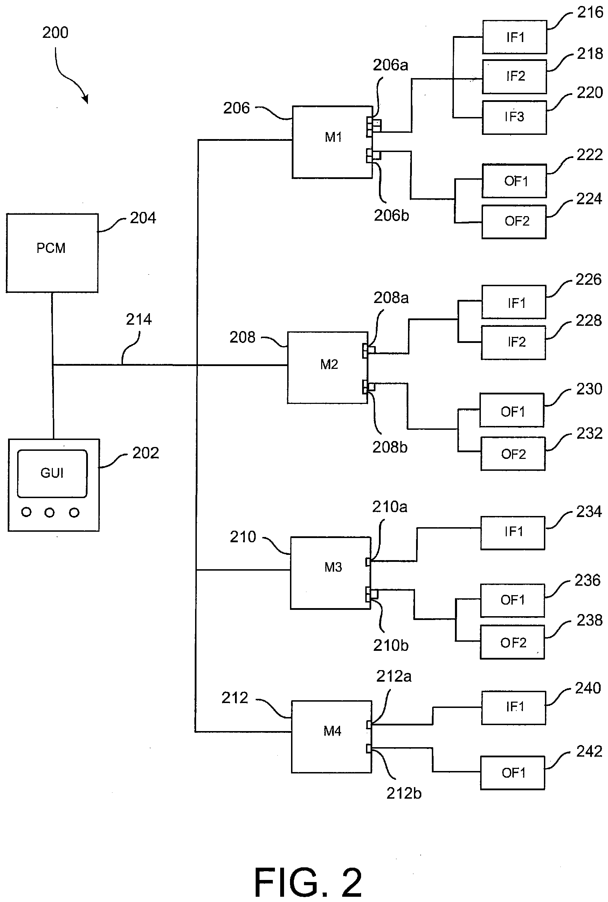

With this in mind, FIG. 2 depicts a flexible and scalable control system 200 which may be practiced in accordance with the present disclosure. The following description may be made with reference to a refrigeration system, but it should be understood that the present disclosure contemplates incorporation with any other system requiring a control system as well. The control system 200 may include a general user interface 202, such as a graphic user interface (GUI), a power control module (PCM) 204, a first module 206, a second module 208, a third module 210, and a fourth module 212. It should be understood that the control system 200 may have fewer than or more than five modules. An interface bus 214 may operatively couple the components 202, 204, 206, 208, 210, 212 of the control system 200. The interface bus 214 may include a power and ground wire for the power control module 204 to distribute power to the various modules connected to the bus 214.

Furthermore, the interface bus 214 may include a communication path for the GUI 202 to communicate instructions and messages between an end user and the control system 200. In addition, the interface bus 214 may include a controller area network (CAN) bus for the modules 206, 208, 210, 212 to communicate with each other. CAN bus interfaces are widely known and used to communicatively connect components in the automotive environment. The CAN bus interface may allow for module addressing which may help identify the proper module and quantity being connected in the control system 200. Module addressing may provide diagnostic and prognostic tools for the control system 200. Module addressing may enable the control system 200 to check if the proper module is connected and operating properly. If an error is detected, the GUI 202 may display an alarm to the end user.

Each of the modules 206, 208, 210, 212 may include at least one input connector (a) and at least one output connector (b). It should be understood that each module may include more than one input and output connector. Each input connector (a) may be keyed to accept an input functional device, and each output connector (b) may be keyed to accept an output functional device. It should be understood that each input connector (a) may be keyed to accept multiple input functional devices, and each output connector (b) may be keyed to accept multiple output functional devices. In one exemplary embodiment, multiple input functional devices may be connected via harness having a keyed connector mating with a keyed input connector (a), and multiple output functional devices may be connected via harness having a keyed connector mating with a keyed output connector (b). In another exemplary embodiment, the input connectors (a) are keyed differently from the output connectors (b) to ensure that an output functional device may not be mistakenly connected to an input connector, and vice-versa.

For example, in FIG. 2, the first module 206 may have three input connectors 206a keyed to accept three input functional devices 216, 218, 220, and two output connectors 206b keyed to accept two output functional devices 222, 224. The second module 208 may have two input connectors 208a keyed to accept two input functional devices 226, 228, and two output connectors 208b keyed to accept two output functional devices 230, 232. The third module 210 may have one input connector 210a keyed to accept one input functional device 234, and two output connectors 210b keyed to accept two output functional devices 236, 238. The fourth module 212 may have one input connector 212a keyed to accept one input functional device 240, and one output connector 212b keyed to accept one output functional device 242. It should be understood that FIG. 2 is an exemplary embodiment, and that in other embodiments, any quantity and combination of input and output connectors per module that may be feasible may be employed.

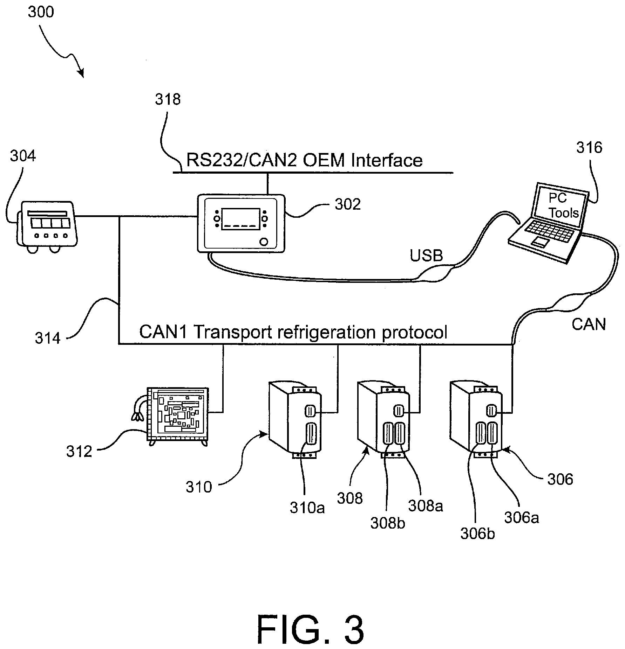

Referring to FIG. 3, an alternative embodiment of a flexible and scalable control system 300 is illustrated. In FIG. 3, the control system 300 may include a graphic user interface (GUI) 302, a power control module (PCM) 304, a first module 306, a second module 308, a third module 310, and a fourth module 312. An interface bus 314, similar to interface bus 214, may communicatively couple the components 302, 304, 306, 308, 310, 312 of the control system 300. The controller area network (CAN) bus, included in the interface bus 314, may communicatively couple the modules 306, 308, 310, 312 of the control system 300. Each module 306, 308, 310, and 312 may have enhanced diagnostic capabilities to identify if each module may be operating properly and if there is a problem, determine if the problem may be internal or external to the module. A portable device 316, such as, but not limited to, a laptop, equipped with diagnostic and/or prognostic software may be communicatively connected to the CAN bus interface and the GUI 302 via high-speed data connection, such as, but not limited to, universal serial bus (USB). The portable device 316 may allow a service technician to quickly examine the control system 300, such as, but not limited to, inputs, outputs, stored data, and alarms, for improved diagnosis and prognosis of problems. In one exemplary embodiment, the portable device 316 may communicatively connect wirelessly to conduct the diagnostic and/or prognostic tests. The wireless communication path may be between the portable device 316 and the first module 306 or the GUI 302. The GUI 302 may also be coupled to an interface bus 318 of a vehicle, on which the transport refrigeration unit 100 may be transported. The interface bus 318 of the vehicle may provide battery power to the control system 300. It should be understood that the control system 300 may obtain its power through other means besides the vehicle battery, such as, but not limited to, the battery of the refrigeration unit 100.

In one exemplary embodiment, the first module 306 may be a main microcontroller module (MMM). The MMM 306 may include a core processing unit (CPU), which may monitor and control the functionality of the control system 300 via the CAN interface bus. The MMM 306 may also include an internal data recorder capable of recording and storing data. The MMM 306 may control the PCM 304, through the interface bus 314, to distribute power to the various components 302, 306, 308, 310, 312 in the control system 300. In one exemplary embodiment, the PCM 304 may include an analog current sensor. The analog current sensor may receive its power from the MMM 306. The analog current sensor may measure DC current flowing through the PCM 304 to a battery, alternator, and electrical loads attached to the PCM 304. The MMM 306 may receive any signals from the analog current sensor for further processing and monitoring. The MMM 306 may also include an input connector 306a and an output connector 306b. The input connector 306a may be keyed to accept a mating wire harness, connecting multiple input functional devices, such as, but not limited to, a pressure sensor. The output connector 306b may be keyed to accept a mating wire harness, connecting multiple output functional devices, such as, but not limited to, an engine speed solenoid. It should be understood that the keyed input connectors (a) and output connectors (b) for modules 306, 308, 310, and 312 should not be limited to accepting a mating wire harness connecting multiple input and output functional devices, but may accept just a single input and output functional device that may be mated with the keyed input connector (a) and output connector (b), respectfully, as described in the following embodiment.

In one exemplary embodiment, the second module 308 may be an optional module. The optional module 308 may include an input connector 308a and an output connector 308b. The input connector 308a may be keyed to accept a mating input functional device, such as, but not limited to, a thermistor. The output connector 308b may be keyed to accept a mating output functional device, such as, but not limited to, a stepper valve.

In one exemplary embodiment, the third module 310 may be a data recording module (DRM). The DRM 310 may include additional memory with the capability to store diagnostic and prognostic data for analysis. The DRM 310 may also include an input connector 310a for connecting additional external devices, such as, but not limited to, sensors and extended memory for increased storage capacity. The capability to expand storage capacity, may allow the control system 300 to adapt to the storage demands of the customer, engineering, and service needs.

In one exemplary embodiment, the fourth module 312 may be a high voltage module (HVM). The HVM 312 may include the capability to control high voltage components in the transport refrigeration unit 100 operated from a high voltage power source, such as, but not limited to, the compressor 102, condenser motor 108, and the evaporator motor 116 through the use of contactors.

The modules 304, 306, 308, 310, 312 in FIG. 3 may be exemplary embodiments depicting the various types of modules that the flexible and scalable control systems 200, 300 may accommodate in order to provide diagnostic and prognostic capabilities. Furthermore, the flexible and scalable control systems 200, 300 may also provide flexible input/output (IO) capabilities. It should be understood that the control systems 200, 300 may have fewer than or more than five modules. Furthermore, it should be understood that all the modules in the control systems 200, 300 may be interchangeable, and any combination of module types may be feasible in a single control system. For example, the control systems 200, 300 may include at least one PCM, at least one first module being an MMM, and at least one second module, wherein the second module maybe a PCM, a MMM, an optional module, a DRM, or a HVM. Typically though, the control systems 200, 300 may include at least one PCM and at least one first module being an MMM. Some control systems 200, 300 may also include at least one second module, wherein the second module may be selected from a group consisting of an optional module, a DRM, and a HVM.

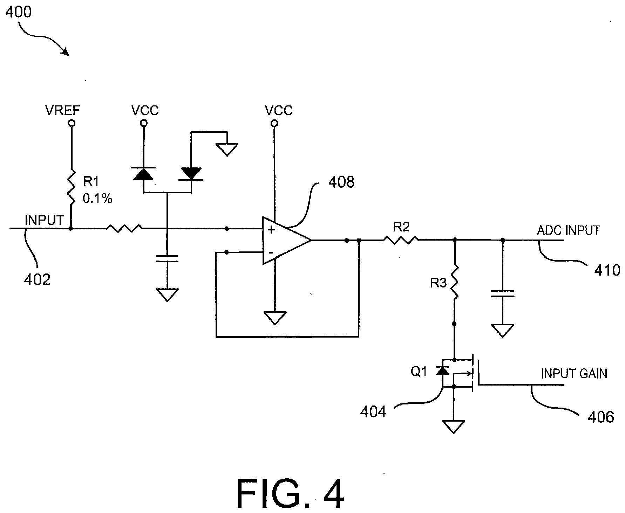

In FIG. 4, an exemplary input circuit schematic 400 which may be used with the input connector (a) in the control systems 200, 300, is illustrated. The input circuit 400 may allow for flexibility of various analog and discrete digital inputs to be connected to the input connector (a). Analog inputs, such as, but not limited to, a thermistor or pressure sensor, may operate at different voltage references (VREF). For example, a thermistor may operate at a VREF = 2.5V to 3V, while a pressure sensor may operate at 2VREF = 5V. Discrete digital inputs, such as, but not limited to, a switch, may operate with logic levels of high (VREF = 3V or 5V) or low (VREF = 0V).

The input circuit 400 may be flexible to accommodate the various input VREF requirements. For example, when a thermistor, operating at VREF, is connected at an input 402 of the input circuit 400, the control systems 200, 300 would be able to configure the input circuit 400 to accommodate VREF level operation. The control systems 200, 300 may configure software to disable a switch 404 through an input control line 406. In one exemplary embodiment, the switch 404 may be a n-channel metal-oxide-semiconductor field-effect transistor (N-channel MOSFET), also referred to as NMOS, wherein the input control line 406 may deactivate the NMOS 404 and apply an effective GAIN = 1. With the NMOS 404 being "OFF", a resistor (R1) and an internal impedance of the thermistor may create a voltage divider. The voltage divider input may be buffered by an op-amp 408 before being driven to an analog-to-digital converter (ADC) as an input 410. The ADC may convert the input 410 to a digital signal, which can be translated to engineering units (e.g. C° or F°).

On the other hand, when a pressure sensor, operating at 2VREF is connected at the input 402, the control systems 200, 300 may configure the input circuit 400 to accommodate 2VREF level operation. The control systems 200, 300 may configure software to bias the NMOS 404 by applying an effective GAIN = (R3/(R2+R3)) by activating the input control line 406. Once the NMOS 404 turns "ON", the voltage level 2VREF at input 402 may be reduced by the voltage divider (R2/R3) to VREF at input 410, before being driven to the ADC to be converted to engineering units (e.g. PSIG).

A discrete digital input, such as a switch, may be configured in a similar manner. The input connected to the input 402 may be an open collector using resistor (R1) as a pull-up, or it may be a dry contact connected to ground or battery voltage. The NMOS 404 may be biased to be "ON", so that the digital input may be driven through the voltage divider (R2/R3) before being fed to the ADC to be converted to engineering units (e.g. open/closed). It should be understood that input circuit 400 may be an exemplary embodiment, and that other circuit designs resulting in flexible input accommodation may be feasible.

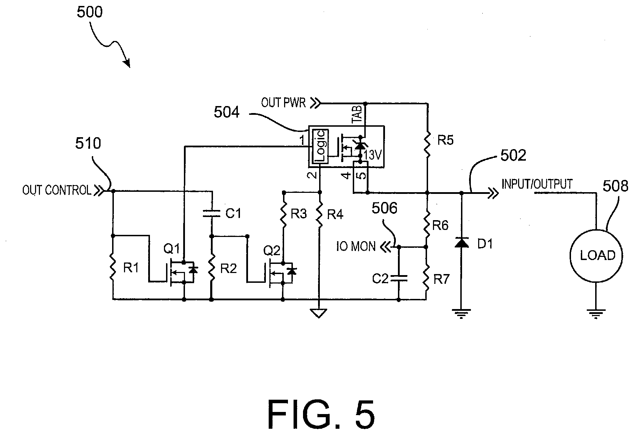

Referring to FIG. 5, an exemplary output circuit schematic 500 which may be used with the output connector (b) in the control systems 200, 300 is illustrated. The output circuit 500 may allow for flexibility of accommodating outputs and discrete digital inputs to be connected to the output connector (b). The control systems 200, 300 may configure the output circuit 500 to accommodate an output or a discrete digital input. For example, if a discrete digital input is connected at input/output 502, then the control systems 200, 300 may configure for a logic device 504, such as, but not limited to, a field-effect transistor (FET), to be disabled. With the logic device 504 being disabled, the discrete digital input may experience only a voltage divider (R5/(R6+R7)), placed from a power supply to ground. An IO MON feedback line 506 may be placed between voltage divider (R6/R7). The IO MON feedback line 506 may allow the software of the control systems 200, 300 to determine if the discrete digital input is "open" or "closed".

On the other hand, if a load 508 is attached to the input/output 502, the control systems 200, 300 may configure the output circuit 500 to accommodate an output by activating the logic device 504. Once the logic device 504 is activated, the software of the control systems 200, 300 may control the load 508 via output control line 510. The IO MON feedback line 506 may detect proper operation and attachment of the load 508. If a load is attached and the load impedance may be much lower than impedance (R6+R7), then a low voltage signal may be detected by IO MON feedback line 506. The low voltage signal may indicate that the load 508 may be "OFF". Once the load 508 is turned "ON", the IO MON feedback 506 may detect a voltage increase indicating that the load is attached and the output is "ON". It should be understood that output circuit 500 may be an exemplary embodiment, and that other circuit designs resulting in flexible input/output (IO) accommodation may be feasible.

The control systems 200, 300 capabilities of module addressing, module and IO interchangeability and flexibility, module and IO scalability, module and IO monitoring, and increased storage capacity may allow the control systems to provide the transport refrigeration unit 100 with enhanced diagnostic and prognostic capabilities.

## Claims

1. A control system (200, 300), comprising:
a user interface (202, 302) capable of receiving and dispatching information;
a power control module (204, 304) capable of distributing power;
a first module (206, 306) having a controller and at least one flexibly configurable input connector (206a, 306a) and at least one flexibly configurable output connector (206b, 306b);
wherein the control system (200,300) is configured to configure an output circuit (500) of the output connector to accommodate an output or a discrete digital input via a feedback line (506) that allows software of the control system to determine if the discrete digital input is open or closed such that, if a discrete digital input is connected at the output connector, a logic device (504) of the control system is disabled such that the discrete digital input experiences only a voltage divider, placed from a power supply to ground, wherein the feedback line is placed between the voltage divider;
each of the at least one flexibly configurable input connector (206a, 306a) configured to accommodate a plurality of analog inputs and discrete digital inputs and each of the at least one flexibly configurable output connector (206b, 306b) configured to accommodate a plurality of outputs or discrete digital inputs; and
an interface bus (214, 314) communicatively coupling the user interface (202, 302), the power control module (204, 304), and the first module (206, 306).

2. The control system (200, 300) of claim 1, wherein the interface bus (214, 314) includes a controller area network (CAN) interface bus.

3. The control system (200, 300) of claim 1, further comprising a second module (208, 308) having at least one flexibly configurable input connector (208a, 308a) and at least one flexibly configurable output connector (208b, 308b).

4. The control system (200, 300) of claim 3, wherein the second module (208, 308) is selected from a group consisting of an optional module, a data recording module, and a high voltage module.

5. The control system (200, 300) of claim 1, wherein the at least one flexibly configurable input connector (206a, 306a) of the first module (206, 306) is selected from a group consisting of a thermistor and a sensor.

6. The control system (200, 300) of claim 1, wherein the power control module (204, 304) includes at least one analog current sensor.

7. The control system (200, 300) of claim 1, wherein the controller of the first module (206, 306) is programmed to perform diagnostic and prognostic tests on the system and report out to be displayed by the user interface (202, 302).

8. The control system (200, 300) of claim 1, wherein the user interface (202, 302) is capable of receiving and dispatching information remotely.

9. The control system (200, 300) of claim 1, wherein the first module (306) is a main microcontroller module configured to monitor and control the functionality of the control system (300) via the interface bus (314).

10. The control system (200, 300) of claim 9, wherein the main microcontroller module controls the power control module (304) through the interface bus (314) to distribute power to components of the control system (300).

11. A method for providing a flexible and scalable control system (200, 300), comprising:
providing an interface bus (214, 314) capable of interchangeably accepting various modules;
providing a plurality of modules (206, 208, 210, 212, 306, 308, 310, 312), each module (206, 208, 210, 212, 306, 308, 310, 312) having at least one flexibly configurable input connector (206a, 208a, 210a, 212a, 306a, 308a, 310a) and at least one flexibly configurable output connector (206b, 208b, 210b, 212b, 306b, 308b, 310b);
wherein the control system configures an output circuit (500) of the output connector to accommodate an output or a discrete digital input via a feedback line (506) that allows software of the control system to determine if the discrete digital input is open or closed such that, if a discrete digital input is connected at the output connector, a logic device (504) of the control system is disabled such that the discrete digital input experiences only a voltage divider, placed from a power supply to ground, wherein the feedback line is placed between the voltage divider;
each of the at least one flexibly configurable input connector (206a, 208a, 210a, 212a, 306a, 308a, 310a) configured to accommodate a plurality of analog inputs and discrete digital inputs and each of the at least one flexibly configurable output connector (206b, 208b, 210b, 212b, 306b, 308b, 310b) configured to accommodate a plurality of outputs or discrete digital inputs;
addressing each module (206, 208, 210, 212, 306, 308, 310, 312) communicatively coupled to the interface bus (214, 314) to ensure modular identification and configuration;
identifying that proper input and output devices are operatively coupled to the connectors (206a, 206b, 208a, 208b, 210a, 210b, 212a, 212b, 306a, 306b, 308a, 308b, 310a) of the modules (206, 208, 210, 212, 306, 308, 310, 312);
recording any improper operation detected in the system with an internal data recorder operatively coupled to one of the plurality of modules (206, 208, 210, 212, 306, 308, 310, 312); and
reporting any improper operation detected in the system through a user interface (202, 302).

12. The method of claim 11, wherein addressing each module (206, 208, 210, 212, 306, 308, 310, 312), configuring the connectors (206a, 206b, 208a, 208b, 210a, 210b, 212a, 212b, 306a, 306b, 308a, 308b, 310a), identifying proper input and output devices, and reporting improper operation is performed by a controller.

13. The method of claim 11, further comprising configuring at least one of the plurality of modules (206, 208, 210, 212, 306, 308, 310, 312) as a main microcontroller module (306) to monitor and control the functionality of the control system (300) via the interface bus (314).

14. The method of claim 11, further comprising configuring at least one of the plurality of modules (206, 208, 210, 212, 306, 308, 310, 312) as one of an optional module, a data recording module, or a high voltage module.

15. The method of claim 11, further comprising providing a power control module (204, 304) configured for distributing power to components of the control system (200, 300).

## Patentansprüche

1. Steuerungssystem (200, 300), das Folgendes umfasst:
eine Benutzerschnittstelle (202, 302), die dazu in der Lage ist, Informationen zu empfangen und zu versenden;
ein Leistungssteuerungsmodul (204, 304), das dazu in der Lage ist, Leistung zu verteilen;
ein erstes Modul (206, 306), das eine Steuerung und mindestens einen flexibel konfigurierbaren Eingabeverbinder (206a, 306a) und mindestens einen flexibel konfigurierbaren Ausgabeverbinder (206b, 306b) aufweist;
wobei das Steuerungssystem (200, 300) dazu konfiguriert ist, eine Ausgabeschaltung (500) des Ausgabeverbinders dazu zu konfigurieren, eine Ausgabe oder eine diskrete digitale Eingabe über eine Rückkopplungsleitung (506) unterzubringen, die es einer Software des Steuerungssystems ermöglicht zu bestimmen, ob die diskrete digitale Eingabe offen oder geschlossen ist, sodass, falls eine diskrete digitale Eingabe an dem Ausgabeverbinder verbunden ist, eine Logikvorrichtung (504) des Steuerungssystems derart ausgeschaltet ist, dass die diskrete digitale Eingabe nur einen Spannungsteiler erfährt, der von einer Leistungsversorgung zur Erdung platziert ist, wobei die Rückkopplungsleitung zwischen dem Spannungsteiler platziert ist;
wobei jeder des mindestens einen flexibel konfigurierbaren Eingabeverbinders (206a, 306a) dazu konfiguriert ist, eine Vielzahl von analogen Eingaben und diskreten digitalen Eingaben unterzubringen und jeder des mindestens einen flexibel konfigurierbaren Ausgabeverbinders (206b, 306b) dazu konfiguriert ist, eine Vielzahl von Ausgaben oder diskreten digitalen Eingaben unterzubringen; und
einen Schnittstellenbus (214, 314), der die Benutzerschnittstelle (202, 302), das Leistungssteuerungsmodul (204, 304) und das erste Modul (206, 306) kommunikativ miteinander koppelt.

2. Steuerungssystem (200, 300) nach Anspruch 1, wobei der Schnittstellenbus (214, 314) einen Controller-Area-Network(CAN-)Schnittstellenbus beinhaltet.

3. Steuerungssystem (200, 300) nach Anspruch 1, das ferner ein zweites Modul (208, 308) umfasst, das mindestens einen flexibel konfigurierbaren Eingabeverbinder (208a, 308a) und mindestens einen flexibel konfigurierbaren Ausgabeverbinder (208b, 308b) aufweist.

4. Steuerungssystem (200, 300) nach Anspruch 3, wobei das zweite Modul (208, 308) aus einer Gruppe ausgewählt ist, die aus einem optionalen Modul, einem Datenaufzeichnungsmodul und einem Hochspannungsmodul besteht.

5. Steuerungssystem (200, 300) nach Anspruch 1, wobei der mindestens eine flexibel konfigurierbare Eingabeverbinder (206a, 306a) des ersten Moduls (206, 306) ausgewählt ist aus einer Gruppe bestehend aus einem Thermistor und einem Sensor.

6. Steuerungssystem (200, 300) nach Anspruch 1, wobei das Leistungssteuerungsmodul (204, 304) mindestens einen analogen Stromsensor beinhaltet.

7. Steuerungssystem (200, 300) nach Anspruch 1, wobei die Steuerung des ersten Moduls (206, 306) dazu programmiert sind, diagnostische und prognostische Tests auf dem System durchzuführen und diese zum Anzeigen durch die Benutzerschnittstelle (202, 302) zu berichten.

8. Steuerungssystem (200, 300) nach Anspruch 1, wobei die Benutzerschnittstelle (202, 302) dazu in der Lage ist, Informationen entfernt zu empfangen und zu senden.

9. Steuerungssystem (200, 300) nach Anspruch 1, wobei das erste Modul (306) ein Hauptmikrocontrollermodul ist, das dazu konfiguriert ist, die Funktionalität des Steuerungssystems (300) über den Schnittstellenbus (314) zu steuern.

10. Steuerungssystem (200, 300) nach Anspruch 9, wobei das Hauptmikrocontrollermodul das Leistungssteuerungsmodul (304) durch den Schnittstellenbus (314) steuert, um Leistung an Komponenten des Steuerungssystems (300) zu verteilen.

11. Verfahren zum Bereitstellen eines flexiblen und skalierbaren Steuerungssystems (200, 300), das Folgendes umfasst:
Bereitstellen eines Schnittstellenbusses (214, 314), der dazu in der Lage ist, verschiedene Module austauschbar anzunehmen;
Bereitstellen einer Vielzahl von Modulen (206, 208, 210, 212, 306, 308, 310, 312), wobei jedes Modul (206, 208, 210, 212, 306, 308, 310, 312) mindestens einen flexibel konfigurierbaren Eingabeverbinder (206a, 208a, 210a, 212a, 306a, 308a, 310a) und mindestens einen flexibel konfigurierbaren Ausgabeverbinder (206b, 208b, 210b, 212b, 306b, 308b, 310b) aufweist;
wobei das Steuerungssystem eine Ausgabeschaltung (500) des Ausgabeverbinders dazu konfiguriert, eine Ausgabe oder eine diskrete digitale Eingabe über eine Rückkopplungsleitung (506) unterzubringen, die es einer Software des Steuerungssystems ermöglicht zu bestimmen, ob die diskrete digitale Eingabe offen oder geschlossen ist, sodass, falls eine diskrete digitale Eingabe mit dem Ausgabeverbinder verbunden ist, eine Logikvorrichtung (504) des Steuerungssystems ausgeschaltet ist, sodass die digitale Eingabe nur einen Spannungsteiler erfährt, der von einer Leistungsversorgung zur Erdung platziert ist, wobei die Rückkopplungsleitung zwischen dem Spannungsteiler platziert ist;
jeder des mindestens einen flexibel konfigurierbaren Eingabeverbinders (206a, 208a, 210a, 212a, 306a, 308a, 310a) dazu konfiguriert ist, eine Vielzahl von analogen Eingaben und diskreten digitalen Eingaben unterzubringen und jeder des mindestens einen flexibel konfigurierbaren Ausgabeverbinders (206b, 208b, 210b, 212b, 306b, 308b, 310b) dazu konfiguriert ist, eine Vielzahl von Ausgaben oder diskreten digitalen Eingaben unterzubringen;
Adressieren von jedem Modul (206, 208, 210, 212, 306, 308, 310, 312), das kommunikativ mit dem Schnittstellenbus (214, 314) verbunden ist, um modulare Identifizierung und Konfiguration sicherzustellen;
Identifizieren, dass die richtige Eingabe- und Ausgabevorrichtung mit den Verbindern (206a, 206b, 208a, 208b, 210a, 210b, 212a, 212b, 306a, 306b, 308a, 308b, 310a) der Module (206, 208, 210, 212, 306, 308, 310, 312) wirkverbunden sind;
Aufzeichnen mit einem inneren Datenaufzeichner, der an eines der Vielzahl von Modulen (206, 208, 210, 212, 306, 308, 310, 312) wirkgekoppelt ist, von jedem beliebigen fehlerhaften Vorgang, der in dem System detektiert wird; und
Berichten von jedem fehlerhaften Vorgang, der in dem System detektiert wurde, durch eine Benutzerschnittstelle (202, 302).

12. Verfahren nach Anspruch 11, wobei das Adressieren von jedem Modul (206, 208, 210, 212, 306, 308, 310, 312), das Konfigurieren der Verbinder (206a, 206b, 208a, 208b, 210a, 210b, 212a, 212b, 306a, 306b, 308a, 308b, 310a), das Identifizieren der richtigen Eingabe- und Ausgabevorrichtung und das Berichten von fehlerhaftem Betrieb durch eine Steuerung ausgeführt wird.

13. Verfahren nach Anspruch 11, das ferner das Konfigurieren von mindestens einem einer Vielzahl von Modulen (206, 208, 210, 212, 306, 308, 310, 312) als ein Hauptmikrocontrollermodul (306) zum Überwachen und Steuern der Funktionalität des Steuerungssystems (300) über den Schnittstellenbus (314) umfasst.

14. Verfahren nach Anspruch 11, das ferner das Konfigurieren von mindestens einem der Vielzahl von Modulen (206, 208, 210, 212, 306, 308, 310, 312) als eines von einem optionalen Modul, einem Datenaufzeichnungsmodul oder einem Hochspannungsmodul umfasst.

15. Verfahren nach Anspruch 11, das ferner ein Bereitstellen eines Leistungssteuerungsmoduls (204, 304) umfasst, das dazu konfiguriert ist, Leistung an Komponenten des Steuerungssystems (200, 300) zu verteilen.

## Revendications

1. Système de commande (200, 300), comprenant :
une interface utilisateur (202, 302) apte à recevoir et répartir des informations ;
un module de commande de puissance (204, 304) apte à distribuer de la puissance ;
un premier module (206, 306) ayant un contrôleur et au moins un connecteur d'entrée configurable de manière flexible (206a, 306a) et au moins un connecteur de sortie configurable de manière flexible (206b, 306b) ;
dans lequel le système de commande (200, 300) est configuré pour configurer un circuit de sortie (500) du connecteur de sortie pour héberger une sortie ou une entrée numérique discrète via une ligne de rétroaction (506) qui permet à un logiciel du système de commande de déterminer si l'entrée numérique discrète est ouverte ou fermée de sorte que, si une entrée numérique discrète est connectée au connecteur de sortie, un dispositif logique (504) du système de commande est désactivé de sorte que l'entrée numérique discrète subit uniquement un diviseur de tension, placé d'une alimentation électrique à la masse, dans lequel la ligne de rétroaction est placée entre le diviseur de tension ;
chacun de l'au moins un connecteur d'entrée configurable de manière flexible (206a, 306a) est configuré pour héberger une pluralité d'entrées analogiques et d'entrées numériques discrètes et chacun de l'au moins un connecteur de sortie configurable de manière flexible (206b, 306b) est configuré pour héberger une pluralité de sorties ou d'entrées numériques discrètes ; et
un bus d'interface (214, 314) couplant en communication l'interface utilisateur (202, 302), le module de commande de puissance (204, 304) et le premier module (206, 306).

2. Système de commande (200, 300) selon la revendication 1, dans lequel le bus d'interface (214, 314) inclut un bus d'interface de réseau de zone de contrôleur (CAN).

3. Système de commande (200, 300) selon la revendication 1, comprenant en outre un second module (208, 308) ayant au moins un connecteur d'entrée configurable de manière flexible (208a, 308a) et au moins un connecteur de sortie configurable de manière flexible (208b, 308b).

4. Système de commande (200, 300) selon la revendication 3, dans lequel le second module (208, 308) est sélectionné parmi un groupe constitué d'un module optionnel, d'un module d'enregistrement de données et d'un module haute tension.

5. Système de commande (200, 300) selon la revendication 1, dans lequel l'au moins un connecteur d'entrée configurable de manière flexible (206a, 306a) du premier module (206, 306) est sélectionné parmi un groupe constitué d'un thermistor et d'un capteur.

6. Système de commande (200, 300) selon la revendication 1, dans lequel le module de commande de puissance (204, 304) inclut au moins un capteur de courant analogique.

7. Système de commande (200, 300) selon la revendication 1, dans lequel le contrôleur du premier module (206, 306) est programmé pour réaliser des tests de diagnostic et de pronostic sur le système et faire un rapport à afficher par l'interface utilisateur (202, 302).

8. Système de commande (200, 300) selon la revendication 1, dans lequel l'interface utilisateur (202, 302) est apte à recevoir et répartir des informations à distance.

9. Système de commande (200, 300) selon la revendication 1, dans lequel le premier module (306) est un module de microcontrôleur principal configuré pour surveiller et commander la fonctionnalité du système de commande (300) via le bus d'interface (314).

10. Système de commande (200, 300) selon la revendication 9, dans lequel le module de microcontrôleur principal commande le module de commande de puissance (304) à travers le bus d'interface (314) pour distribuer de la puissance aux composants du système de commande (300).

11. Procédé de fourniture d'un système de commande flexible et adaptable (200, 300), comprenant :
la fourniture d'un bus d'interface (214, 314) apte à accepter de manière interchangeable divers modules ;
la fourniture d'une pluralité de modules (206, 208, 210, 212, 306, 308, 310, 312), chaque module (206, 208, 210, 212, 306, 308, 310, 312) ayant au moins un connecteur d'entrée configurable de manière flexible (206a, 208a, 210a, 212a, 306a, 308a, 310a) et au moins un connecteur de sortie configurable de manière flexible (206b, 208b, 210b, 212b, 306b, 308b, 310b) ;
dans lequel le système de commande configure un circuit de sortie (500) du connecteur de sortie pour héberger une sortie ou une entrée numérique discrète via une ligne de rétroaction (506) qui permet à un logiciel du système de commande de déterminer si l'entrée numérique discrète est ouverte ou fermée de sorte que, si une entrée numérique discrète est connectée au connecteur de sortie, un dispositif logique (504) du système de commande est désactivé de sorte que l'entrée numérique discrète subit uniquement un diviseur de tension, placé d'une alimentation électrique à la masse, dans lequel la ligne de rétroaction est placée entre le diviseur de tension ;
chacun de l'au moins un connecteur d'entrée configurable de manière flexible (206a, 208a, 210a, 212a, 306a, 308a, 310a) est configuré pour héberger une pluralité d'entrées analogiques et d'entrées numériques discrètes et chacun de l'au moins un connecteur de sortie configurable de manière flexible (206b, 208b, 210b, 212b, 306b, 308b, 310b) est configuré pour héberger une pluralité de sorties ou d'entrées numériques discrètes ;
l'adressage de chaque module (206, 208, 210, 212, 306, 308, 310, 312) couplé en communication au bus d'interface (214, 314) pour assurer une identification et une configuration modulaires ;
l'identification que des dispositifs d'entrée et de sortie appropriés sont couplés de manière fonctionnelle aux connecteurs (206a, 206b, 208a, 208b, 210a, 210b, 212a, 212b, 306a, 306b, 308a, 308b, 310a) des modules (206, 208, 210, 212, 306, 308, 310, 312) ;
l'enregistrement de toute opération inappropriée détectée dans le système avec un enregistreur de données interne couplé de manière fonctionnelle à l'un de la pluralité de modules (206, 208, 210, 212, 306, 308, 310, 312) ; et
le rapport de toute opération inappropriée détectée dans le système à travers une interface utilisateur (202, 302).

12. Procédé selon la revendication 11, dans lequel l'adressage de chaque module (206, 208, 210, 212, 306, 308, 310, 312), la configuration des connecteurs (206a, 206b, 208a, 208b, 210a, 210b, 212a, 212b, 306a, 306b, 308a, 308b, 310a), l'identification de dispositifs d'entrée et de sortie appropriés et le rapport d'une opération inappropriée est réalisé(e) par un contrôleur.

13. Procédé selon la revendication 11, comprenant en outre la configuration d'au moins l'un de la pluralité de modules (206, 208, 210, 212, 306, 308, 310, 312) en tant que module de microcontrôleur principal (306) pour surveiller et contrôler la fonctionnalité du système de commande (300) via le bus d'interface (314).

14. Procédé selon la revendication 11, comprenant en outre la configuration d'au moins l'un de la pluralité de modules (206, 208, 210, 212, 306, 308, 310, 312) comme l'un d'un module optionnel, d'un module d'enregistrement de données ou d'un module haute tension.

15. Procédé selon la revendication 11, comprenant en outre la fourniture d'un module de commande de puissance (204, 304) configuré pour distribuer de la puissance aux composants du système de commande (200, 300).
